(19) Europäisches Patentamt
European Patent Office
Office européen des brevets

(11) **EP 3 403 054 B1**

(12) **FASCICULE DE BREVET EUROPEEN**

(45) Date de publication et mention de la délivrance du brevet:
**18.03.2020 Bulletin 2020/12**

(21) Numéro de dépôt: **17700448.8**

(22) Date de dépôt: **16.01.2017**

(51) Int Cl.:
**G01C 21/16** *(2006.01)*      **G01C 25/00** *(2006.01)*

(86) Numéro de dépôt international:
**PCT/EP2017/050832**

(87) Numéro de publication internationale:
**WO 2017/121904 (20.07.2017 Gazette 2017/29)**

(54) **DISPOSITIF ET PROCEDE D'ENTRETIEN D'ATTITUDE D'UN PORTEUR UTILISANT DES GYROMETRES**

VORRICHTUNG UND VERFAHREN ZUR BEWAHRUNG DER LAGE EINES TRÄGERS UNTER VERWENDUNG EINES KREISELS

DEVICE AND METHOD FOR MAINTAINING THE ATTITUDE OF A CARRIER USING GYROSCOPES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2016 FR 1650288**

(43) Date de publication de la demande:
**21.11.2018 Bulletin 2018/47**

(73) Titulaire: **Safran Electronics & Defense**
**92100 Boulogne-Billancourt (FR)**

(72) Inventeurs:
• **BUDIN, Joël**
**92100 Boulogne-Billancourt (FR)**
• **PINTURAUD, Arnaud**
**92100 Boulogne-Billancourt (FR)**
• **WOISELLE, Arnaud**
**92100 Boulogne-Billancourt (FR)**
• **PONSSARD, Clément**
**92100 Boulogne Billancourt (FR)**

(74) Mandataire: **Regimbeau**
**20, rue de Chazelles**
**75847 Paris Cedex 17 (FR)**

(56) Documents cités:
**EP-A2- 2 372 656      US-A1- 2010 063 763**
**US-B1- 9 170 105**

• **MYUNG HWANGBO ET AL: "IMU Self-Calibration Using Factorization", IEEE TRANSACTIONS ON ROBOTICS, IEEE SERVICE CENTER, PISCATAWAY, NJ, US, vol. 29, no. 2, 1 avril 2013 (2013-04-01), pages 493-507, XP011499207, ISSN: 1552-3098, DOI: 10.1109/TRO.2012.2230994**

**Description**

**DOMAINE DE L'INVENTION**

La présente invention concerne un dispositif et un procédé d'entretien de l'attitude d'un porteur utilisant des gyromètres.

**ETAT DE LA TECHNIQUE**

Pour calculer puis entretenir l'attitude d'un porteur, il est connu d'utiliser trois gyromètres primaires agencés pour mesurer des vitesses de rotation suivants trois axes différents, au cours du déplacement du porteur.

Sont calculés, à partir des mesures acquises par les trois gyromètres, un angle de cap, un angle de tangage, et un angle de roulis du porteur, qui définissent ensemble l'attitude du porteur dans l'espace.

Il est également connu d'utiliser un gyromètre secondaire pour corriger des erreurs de facteur d'échelle qui entachent les mesures acquises par les trois gyromètres primaires.

Toutefois, l'utilisation d'un tel quatrième gyromètre n'est pas efficace pour corriger des erreurs de dérives qui entachent les mesures fournies par les gyromètres.

Le document US 9 170 105 B1 décrit un dispositif d'entretien de l'attitude d'un porteur comprenant au moins trois gyroscopes primaires et au moins un un gyroscope secondaire d'axe sensible différent des axes des gyroscopes primaires ainsi qu'un capteur d'étoile. Le dispositif estime les erreurs de biais des gyroscopes primaires en utilisant les mesures fournies par l'ensemble des gyroscopes et le capteur d'étoile.

Par ailleurs, le document "MYUNG HWANGBO ET AL: "IMU Self-Calibration Using Factorization", IEEE TRANSACTIONS ON ROBOTICS" divulgue un dispositif d'auto-calibration d'une centrale inertielle comprenant une unité inertielle primaire agencée pour mesurer des vitesses de rotation primaires d'un porteur autour de trois axes primaires et une unité inertielle secondaire similaire à l'unité primaire et agencée pour mesurer une vitesse de rotation secondaire du porteur autour d'un axe secondaire différent de chacun des axes primaires, une caméra présentant un axe optique différent de chacun des axes primaires et un module de traitement de données configuré pour estimer des erreurs de facteur d'échelle et de dérive qui entachent les vitesses de rotation primaires à l'aide de données issues de la vitesse de rotation secondaire et d'images acquises par la caméra.

**EXPOSE DE L'INVENTION**

L'invention se propose donc d'entretenir l'attitude d'un porteur avec une précision améliorée par rapport aux solutions proposées dans l'état de la technique.

Il est dès lors proposé, selon un premier aspect, un dispositif d'entretien d'attitude d'un porteur, selon la revendication 1, le dispositif comprenant :

- trois gyromètres primaires agencés pour mesurer des vitesses de rotation primaires d'un porteur autour de trois axes primaires,
- Un gyromètre secondaire agencé pour mesurer une vitesse de rotation secondaire du porteur autour d'un axe secondaire différent de chacun des axes primaires,
- une caméra présentant un axe optique différent de chacun des axes primaires,
- un module de traitement de données configuré pour

  ○ estimer des erreurs de facteur d'échelle et de dérive qui entachent les vitesses de rotation primaires à l'aide de données issues de la vitesse de rotation secondaire et d'images acquises par la caméra, et
  ○ corriger les vitesses de rotation primaires avec lesdites erreurs estimées

Dans la présente invention, la caméra et le gyromètre secondaire se combinent de façon synergique. En effet, l'exploitation combinée de la vitesse de rotation fournie par le gyromètre secondaire et des images acquises par la caméra permet de corriger non seulement des erreurs de facteur d'échelle qui entachent les vitesses de rotation mesurées par les gyromètres primaires, mais également de corriger des erreurs de dérives.

Les vitesses de rotation mesurées par les gyromètres primaires sont ainsi plus précisément corrigées qu'avec un dispositif à quatre gyromètres.

Selon l'invention, le gyromètre secondaire est choisi d'un type adapté pour susciter des erreurs de facteur d'échelle et/ou des erreurs de dérive dans la vitesse de rotation secondaire qui sont inférieures à celles suscitées par les gyromètres primaires dans les vitesses de rotation primaires.

Le dispositif selon le premier aspect de l'invention peut être complété avec les caractéristiques optionnelles suivantes prises seules ou en combinaison lorsque cela est techniquement possible.

- Le module de traitement de données comprend un filtre d'hybridation, tel qu'un filtre de Kalman, configuré pour estimer les erreurs de facteur d'échelle et de dérive à partir des données issues de la vitesse de rotation secondaire et d'images acquises par la caméra.
- L'axe optique de la caméra est parallèle à l'axe secondaire.
- Le gyromètre secondaire est du type hémisphérique vibrant et/ou les gyromètres primaires sont du type MEMS.
- Les trois axes primaires sont orthogonaux deux à deux, et l'axe secondaire forme un angle de 54.7 degrés avec chaque axe primaire.

Il est également proposé, selon un deuxième aspect, un procédé d'entretien d'attitude d'un porteur, selon la revendication 7, comprenant des étapes de :

- mesure de trois vitesses de rotation du porteur autour de trois axes primaires sécants deux à deux à l'aide de trois gyromètres primaires,
- mesure d'une vitesse de rotation autour d'un axe secondaire sécant avec chacun des axes primaires à l'aide d'un gyromètre secondaire,

le procédé étant caractérisé par des étapes de :

- acquisition d'images à l'aide d'une caméra présentant un axe optique différent de chacun des axes primaires,
- estimation d'erreurs de facteur d'échelle et de dérive qui entachent les vitesses de rotation primaires, à l'aide de données issues de la vitesse de rotation secondaire et issues des images acquises par la caméra,
- correction des vitesses de rotation primaires à l'aide desdites erreurs estimées.

Le procédé selon le deuxième aspect de l'invention peut être complété avec les caractéristiques optionnelles suivantes prises seules ou en combinaison lorsque cela est techniquement possible.

- L'estimation des erreurs de facteur d'échelle et de dérive est mise en œuvre par un filtre d'hybridation, tel qu'un filtre de Kalman, au moyen de données d'observation dépendant d'un écart $\delta$ entre une vitesse de rotation dépendant de la vitesse de rotation secondaire, et une vitesse de rotation du porteur autour de l'axe secondaire déduite des vitesses de rotation primaires.
- La vitesse de rotation dépendant de la vitesse de rotation secondaire est une vitesse résultant d'une correction de la vitesse de rotation secondaire au moyen d'erreurs suscitées par le gyromètre secondaire préalablement estimées par le filtre d'hybridation.
- Le procédé comprend l'estimation d'une vitesse de rotation, dite vitesse de rotation caméra, et qui est obtenue par analyse des images acquises par la caméra, la correction des erreurs de facteur d'échelle et de dérive dépendant de cette vitesse de rotation caméra estimée.
- L'estimation des erreurs de facteur d'échelle et de dérive est mise en œuvre au moyen de données d'observation dépendant d'un écart $\varepsilon$ entre une vitesse de rotation dépendant de la vitesse de rotation caméra, et une vitesse de rotation du porteur vue par la caméra déduite des vitesses de rotation primaires.
- Le procédé comprend par ailleurs des étapes d'estimation d'une erreur de focale suscitée par la caméra, et de correction, à l'aide de l'erreur de focale, de la vitesse de rotation caméra obtenue par analyse des images acquises par la caméra, de sorte à produire une vitesse de rotation caméra corrigée, dans lequel la vitesse de rotation dépendant de la vitesse de rotation caméra estimée utilisée pour calculer l'écart $\varepsilon$ est la vitesse de rotation caméra corrigée.
- Le procédé comprend en outre des étapes de calcul d'un indice de confiance sur la mesure d'un flot optique dans les images acquises par la caméra, et de comparaison de l'indice avec un seuil prédéterminé, l'étape de correction des vitesses de rotation primaires étant mise en œuvre ou non en fonction du résultat de cette comparaison.
- les vitesses de rotation primaires *Rbc* sont corrigées par application de la formule suivante :

$$\begin{bmatrix} febc1 & 0 & 0 \\ 0 & febc2 & 0 \\ 0 & 0 & febc3 \end{bmatrix} . Rbc - \begin{bmatrix} dbc1 \\ dbc2 \\ dbc3 \end{bmatrix}$$

où *febc*1, *febc*2, *febc*3 sont les erreurs de facteur d'échelle et *dbc*1, *dbc*2 et *dbc*3 sont les erreurs de dérive.
- Le procédé comprend en outre une étape d'intégration produisant des données d'attitude du porteur à partir des vitesses de rotation primaires corrigées.

- Le procédé comprend en outre le calcul de trois vitesses de rotation dites recomposées à partir des vitesses suivantes: les vitesses de correction primaires corrigées à l'aide des erreurs de facteur d'échelle et de dérive estimées, la vitesse résultant de la correction de la vitesse de rotation secondaire, l'une des vitesses de rotation recomposées étant une vitesse de rotation autour de l'axe secondaire, et dans lequel les données d'attitude du porteur sont produites par intégration des vitesses de rotation recomposées.
- Le procédé comprend en outre les étapes d'estimation d'erreurs d'attitude du porteur, et de correction des données d'attitude produites au moyen des erreurs d'attitude estimées.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 illustre de façon schématique un dispositif d'entretien d'attitude selon un mode de réalisation de l'invention ;
- La figure 2 montre l'orientation dans l'espace d'axes particuliers du dispositif de la figure 1 ;
- La figure 3 est un organigramme d'étapes d'un procédé de mesure d'attitude mises en œuvre par le dispositif selon la figure 1 ;
- Les figures 4, 5 et 6 sont des organigrammes d'étape de traitements opérés sur des mesures acquises par le dispositif de la figure 1, selon trois modes de réalisation différents de l'invention.

Sur l'ensemble des figures, les éléments similaires portent des références identiques.

## DESCRIPTION DETAILLEE DE L'INVENTION

*A) Dispositif d'entretien d'attitude*

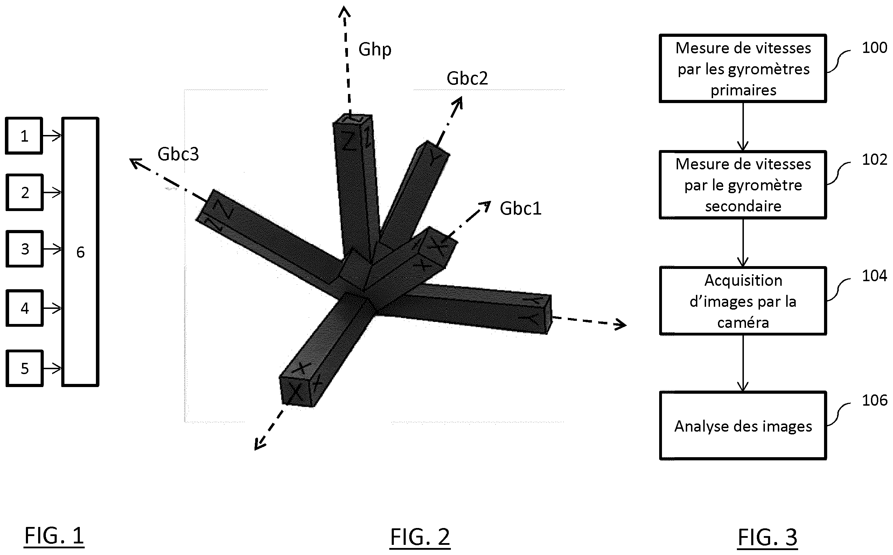

En référence à la **figure 1,** un dispositif d'entretien d'attitude d'un porteur comprend trois gyromètres primaires 1, 2, 3, un gyromètre secondaire 4, une caméra 5 et un module de traitements de données 6.
Les trois gyromètres primaires 1, 2, 3 sont agencés pour mesurer des vitesses de rotation primaires du porteur autour de trois axes primaires différents.
Les trois axes sont par exemple sécants deux à deux. En d'autres termes, l'un des axes n'est pas inclus dans le plan défini par les deux autres axes.
On considéra dans la suite l'exemple non limitatif de gyromètres primaires 1, 2, 3 orientés tels que les trois axes primaires sont sensiblement orthogonaux deux à deux.
Les gyromètres primaires 1, 2, 3 forment ensemble conventionnellement un « trièdre » de gyromètres.
Le gyromètre secondaire 4 est agencé pour mesurer une vitesse de rotation secondaire du porteur autour d'un axe secondaire différent de chacun des axes primaires.
Le gyromètre secondaire 4 est par exemple orienté de façon à ce que son axe secondaire forme le même angle avec chacun des axes primaires, soit 54.7° environ. On dit également que l'axe du gyromètre est orienté sur une diagonale du trièdre de gyromètres primaires.
Par ailleurs, la caméra 5 présente un axe optique différent de chacun des axes primaires.
Le module de traitement de données 6 est configuré pour produire des données d'attitude du porteur à partir des vitesses mesurées par les gyromètres 1, 2, 3, 4 et des images acquises par la caméra 5.
Le module de traitement de données 6 comprend au moins un processeur configuré pour mettre en œuvre des instructions de code de programme.
En particulier, le processeur du module de traitement 6 est configuré pour exécuter un algorithme d'analyse du contenu des images captées par la caméra 5, par exemple un algorithme de mesure de flot optique dans ces images.
Le processeur du module de traitement 6 est par ailleurs configuré pour mettre en œuvre un filtre d'hybridation sur la base des données fournies par les gyromètres et l'algorithme d'analyse.
Par exemple, le filtre d'hybridation, dont le fonctionnement sera décrit par la suite, peut être un filtre de Kalman. De préférence, le filtre de Kalman utilisé est du type étendu.
Les données de sortie du dispositif sont les données d'attitude produites par le module de traitement 6.
L'axe optique est de préférence parallèle à l'axe secondaire, ce qui présente l'avantage de disposer selon l'axe optique - qui est l'axe de faible performance du trièdre « vision » - de la meilleure mesure gyrométrique par hybridation des mesures gyrométriques (cette hybridation sera détaillée plus loin). En effet l'axe secondaire est privilégié puisque les 3 axes primaires lui apportent une redondance d'information alors qu'inversement, seul l'axe secondaire apporte une redondance d'information selon chacun des 3 axes primaires (pour rappel orthogonaux entre eux).

Bien entendu, les erreurs senseurs des gyromètres primaires ont une répercussion sur les données d'attitudes qui sont produites par le module de traitement de données.

Tout gyromètre est sujet à des erreurs senseurs qui entachent les vitesses de rotation qu'il fournit. Ces erreurs senseurs comprennent notamment des erreurs de facteurs d'échelle et des erreurs de dérive. Ainsi, les gyromètres sont conventionnellement classés selon leur précision, c'est-à-dire selon la valeur d'erreur de facteur d'échelle et/ou de dérive que l'on peut rencontrer dans les mesures acquises avec ces gyromètres.

Dans le dispositif d'entretien d'attitude selon l'invention, le gyromètre secondaire 4 est choisi d'un type adapté pour susciter des erreurs de facteur d'échelle et/ou des erreurs de dérive inférieures à celles suscitées par les gyromètres primaires 1, 2, 3.

On prend dans ce qui suit l'exemple de gyromètres primaires exemple de type MEMS, c'est-à-dire des gyromètres à structure vibrante micromécanique.

Les gyromètres de type « MEMS » occasionnent des erreurs de facteur d'échelle et des dérives importantes. En particulier, l'erreur de facteur d'échelle d'un gyromètre MEMS typique actuel est de la classe 3000 à 10000 ppm. Ainsi, une erreur de facteur d'échelle de 10000ppm occasionne une erreur de cap de 1.8° pour une excursion de 180°. La stabilité de dérive (terme technique bas de la variance d'Allan) est de la classe 10°/h.

Néanmoins, les gyromètres de type MEMS présentent l'avantage d'être bon marché et très compacts. De plus, malgré la valeur relativement élevée de leurs erreurs de facteurs d'échelles, celles-ci peuvent être efficacement corrigées par le gyromètre secondaire lorsque celui-ci est choisi de précision supérieure.

Le gyromètre secondaire est par exemple un gyromètre hémisphérique vibrant (GRH).

*B) Principe général de correction d'erreurs de facteur d'échelle des gyromètres primaires à l'aide du gyromètre secondaire*

Est présenté ci-après le principe de fonctionnement théorique du dispositif d'entretien d'attitude.

Les quatre gyromètres 1, 2, 3, 4 définissent ensemble une architecture inertielle hétérogène.

Le gyromètre secondaire 4 est configuré pour observer un mélange des erreurs qui entachent les mesures acquises par les gyromètres primaires 1, 2, 3. Ce concept permet d'accéder entre autres à une combinaison linéaire des facteurs d'échelles suscités par les gyromètres primaires 1, 2, 3, 4 lorsque le porteur [p] est en mouvement de rotation, c'est-à-dire lorsque les erreurs de facteurs d'échelle sont prépondérantes.

De façon non limitative mais pour simplifier l'exposé du principe général de correction général d'erreurs de facteur d'échelle dans les mesures réalisées par les gyromètre, on considère que la mesure de vitesse de rotation mesurée par le gyromètre secondaire 4, notée Rhp, est entachée d'une erreur négligeable.

Le trièdre formé par les trois gyromètres primaires 1, 2, 3 d'axes {Gbcl, Gbc2, Gbc3} effectue des mesures de vitesses de rotations $Rbc = \begin{bmatrix} Rbc1 \\ Rbc2 \\ Rbc3 \end{bmatrix}$.

On définit un repère orthonormé virtuel d'origine GO et d'axes {G1, G2, G3} dont la diagonale de cube est exactement l'axe Ghp. Les vitesses de rotation vraies selon les trois axes de ce trièdre parfait sont notées $R = \begin{bmatrix} R1 \\ R2 \\ R3 \end{bmatrix}$.

On a :

$$Rhp = \frac{[1 \quad 1 \quad 1].R}{\sqrt{3}} \tag{1}$$

Par ailleurs, les trois axes {Gbcl, Gbc2, Gbc3} ne sont pas confondus avec les axes du trièdre {G1, G2, G3}. Les trois gyromètres 1, 2, 3 orientés suivant les axes {Gbcl, Gbc2, Gbc3} effectuent des mesures entachées d'une erreur de facteur d'échelle et d'une erreur de dérive.

Notons Kbc la matrice 3x3 contenant sur sa diagonale les corrections des erreurs de facteurs d'échelles et hors diagonale les termes de correction d'erreurs de calage des axes {Gbcl, Gbc2, Gbc3} par rapport aux axes {G1, G2, G3}.

$$Kbc = \begin{bmatrix} 1 + febc1 & cbc12 & cbc13 \\ cbc21 & 1 + febc2 & cbc23 \\ cbc31 & cbc32 & 1 + febc3 \end{bmatrix}.$$

Notons $dbc = \begin{bmatrix} dbc1 \\ dbc2 \\ dbc3 \end{bmatrix}$ le vecteur colonne contenant les termes de dérive des trois gyromètres primaires 1, 2, 3.

On a l'équation suivante reliant les rotations vraies R aux rotations mesurées Rbc :

$$Kbc.\,Rbc - dbc = R \qquad\qquad (2)$$

Définissons par ailleurs $\delta$ comme un écart entre la mesure Rhp effectuée par le gyromètre secondaire 4, et une information équivalente déduite des mesures fournies par le trièdre de gyromètres primaires 1, 2, 3 :

$$\delta = Rhp - \frac{[1\ \ 1\ \ 1].Rbc}{\sqrt{3}} = \frac{[1\ \ 1\ \ 1].R}{\sqrt{3}} - \frac{[1\ \ 1\ \ 1].Rbc}{\sqrt{3}} \qquad\qquad (3)$$

D'où, en injectant (2) dans (3) :

$$\delta = \frac{[1\ \ 1\ \ 1].\,[Kbc.\,Rbc - dbc]}{\sqrt{3}} - \frac{[1\ \ 1\ \ 1].\,Rbc}{\sqrt{3}}$$

On obtient finalement :

$$\delta = Rbc^{T}.\begin{bmatrix} febc1 + kbc21 + kbc31 \\ febc2 + kbc12 + kbc32 \\ febc3 + kbc13 + kbc23 \end{bmatrix} - [1\ \ 1\ \ 1].\,dbc$$

Par la suite, sous l'hypothèse que les correcteurs de facteurs d'échelles febc1, febc2, febc3 sont de la classe 3000ppm, et que les calages sont connus à 0.5 mrad, et que les termes de dérives sont de la classe 20°/h soit 0.005°/s, lorsque une ou plusieurs des rotations Rbc dépassent la classe 10°/s on peut faire l'approximation :

$$\delta = Rbc^{T}.\begin{bmatrix} febc1 \\ febc2 \\ febc3 \end{bmatrix} \qquad\qquad (4)$$

Par la suite, si on empile en colonne plusieurs réalisations, nous obtenons un système surdéterminé :

$$\Delta = A.\begin{bmatrix} febc1 \\ febc2 \\ febc3 \end{bmatrix}$$

Où $\Delta$ est un empilement en colonne de plusieurs réalisations de $\delta$, et A un empilement en colonnes de plusieurs réalisations du vecteur ligne $Rbc^{T}$.

Les éléments qui précèdent montrent qu'il est donc possible d'identifier, aux erreurs de dérives et calages d'axes près négligés dans l'équation (4), les facteurs d'échelles des gyromètres primaires 1, 2, 3 grâce au gyromètre secondaire 4.

*C) Principe général de correction d'erreurs de dérives des gyromètres primaires à l'aide de la caméra*

En complément des quatre gyromètres 1, 2, 3, 4, l'adjonction de la caméra 5 permet d'accroitre la performance du dispositif d'entretien d'attitude.

La caméra 5 est configurée pour être utilisée comme capteur d'ego-mouvement, par l'utilisation d'un algorithme de résolution du flot optique global des images captées par la caméra 5.

On verra dans la suite que la caméra 5 fourni des informations de vision *Rvi* qui sont combinées avec les mesures fournies par les gyromètres 1, 2, 3, 4.

L'algorithme de mesure du flot optique global utilisé par la caméra 5 fournit un indice de confiance sur sa mesure, permettant de moduler son influence sur la solution d'attitude en fonction de sa disponibilité : contenu exploitable dans les images, vraisemblance du résultat obtenu. Concrètement, on analyse la quantité de pixels exploitables dans l'image, ainsi que la valeur de l'image formée par la soustraction des deux images recalées entre elles.

Dans un mode de réalisation, l'observation de vision $Rvi$ peut être ou ne pas être prise en compte en fonction de la comparaison à un seuil prédéfini de cet indice de confiance du flot optique mesuré.

On considère que la caméra 5 effectue une mesure exempte d'erreur de dérive : la mesure est effectuée entre des paires d'images; l'une des deux images est appelée « référence », et l'autre « test ». L'image « test » est l'image courante.

L'image « référence » est changée uniquement lorsque cela est nécessaire, et typiquement reste inchangée dans une phase d'observation de scène avec des petits mouvements (inférieurs au quart du champ de visualisation). Dans la pratique nous considérerons que la « référence » change suffisamment rarement pour que l'on puisse négliger la dérive dans la mesure de mouvement de rotation par la caméra 5.

Considérons un repère orthonormé d'origine VO et d'axes {V1,V2,V3}, VO étant le centre optique, V1 étant l'axe optique. A noter que cet axe est colinéaire à l'axe Ghp gyro haute performance défini précédemment à une translation près correspondant à l'écart entre l'origine du repère GO et l'origine du repère VO.

On considère que le repère orthonormé (VO,V1,V2,V3) est le repère attaché au porteur [p]. Dans le cadre d'un entretien de l'attitude dudit appareil, les cap, tangage et roulis $\begin{bmatrix} c \\ t \\ r \end{bmatrix}$ sont calculés et permettent un changement de repère entre le repère du porteur [p] et le repère géographique local [g]. Nous noterons Tgp la matrice de changement de repère de [g] vers [p], qui s'obtient directement à partir de $\begin{bmatrix} c \\ t \\ r \end{bmatrix}$ et que nous n'avons pas besoin de détailler ici.

Le trièdre formé par l'axe secondaire et la caméra {Gvi1, Gvi2,Gvi3} effectue des mesures de vitesses de rotation $Rvi = \begin{bmatrix} Rvi1 \\ Rvi2 \\ Rvi3 \end{bmatrix}$.

$Rvi$ est ici un vecteur de vitesses de rotations comprenant 3 composantes, dont une composante est une vitesse de rotation autour de l'axe optique.

Notons Kvi la matrice 3x3 contenant sur sa diagonale les corrections des erreurs de facteurs d'échelles et hors diagonale les termes de correction d'erreurs de calage des axes vision {Gvil, Gvi2, Gvi3} par rapport aux axes {V1, V2, V3}.

$$Kvi = \begin{bmatrix} 1 + fevi1 & cvi12 & cvi13 \\ cvi21 & 1 + fevi2 & cvi23 \\ cvi31 & cvi32 & 1 + fevi3 \end{bmatrix}.$$

A noter que l'on considère la matrice de pixels comme parfaitement carrée et connue, ce qui implique que les erreurs de facteurs d'échelle selon les axes V1 et V2 sont identiques et égales à la méconnaissance de la distance focale.

A noter que la caméra 5 mesure des rotations relativement au repère terrestre et non par rapport au référentiel inertiel comme les gyroscopes. Notons Rt le vecteur de rotation terrestre exprimé - et connu - dans le repère [g].

On a l'équation suivante reliant les rotations inertielles vraies V dans le repère {V0, V1, V2, V3} aux rotations mesurées Rvi :

$$Kvi.\,Rvi = V - Tgp^T.\,Rt \qquad (5)$$

Le trièdre {V1, V2, V3} s'obtient en appliquant trois rotations au trièdre {G1, G2, G3} virtuel défini plus haut :

- Une rotation de 45° selon G3, pour former un trièdre que l'on nommera {*G1bis, G2bis, G3bis*}
- Une rotation de $- \operatorname{atan}\left(\frac{1}{\sqrt{2}}\right) \approx 35.26°$ selon *G2bis,* pour former le trièdre {G1*ter*, G2*ter*, G3*ter*}
- Puis une rotation de 165° selon G1*ter,* pour former le trièdre {*V1, V2, V3*}

La relation entre les rotations inertielles vraies V dans le repère virtuel vision {V0, V1, V2, V3} et les rotations vraies R dans le repère inertiel virtuel {G0, G1, G2, G3} est :

$$R = \text{Tgyvi}.V \qquad (6)$$

Où $\text{Tgyvi} = \begin{bmatrix} 0.5744 & 0.5744 & 0.5744 \\ 0.5744 & -0.7887 & 0.2113 \\ 0.5744 & 0.2113 & -0.7887 \end{bmatrix}$

Maintenant définissons $\varepsilon$ comme l'écart entre la mesure $\text{Rvi} = \begin{bmatrix} \text{Rvi1} \\ \text{Rvi2} \\ \text{Rvi3} \end{bmatrix}$ effectuée par le trièdre vision, et l'information équivalente reconstituée par le trièdre de gyromètres primaires :

$$\varepsilon = \text{Tgyvi}^T.\text{Rbc} - \text{Tgp}^T.\text{Rt} - \text{Rvi}$$

$$\varepsilon = \text{Tgyvi}^T.\text{Rbc} - \text{Tgp}^T.\text{Rt} - \frac{(\text{Tgyvi}^T(\text{Kbc}.\text{Rbc} - \text{dbc}) - \text{Tgp}^T.\text{Rt})}{\text{Kvi}}$$

En considérant maintenant que $\text{Kvi} = \text{Id} + \begin{bmatrix} \text{fevi1} & \text{cvi12} & \text{cvi13} \\ \text{cvi21} & \text{fevi2} & \text{cvi23} \\ \text{cvi31} & \text{cvi32} & \text{fevi3} \end{bmatrix} = \text{Id} + \text{kvi},$ ainsi que

$\text{Kbc} = \text{Id} + \begin{bmatrix} \text{febc1} & \text{cbc12} & \text{cbc13} \\ \text{cbc21} & \text{febc2} & \text{cbc23} \\ \text{cbc31} & \text{cbc32} & \text{febc3} \end{bmatrix} = \text{Id} + \text{kbc},$ et le développement limité $\frac{1}{\text{Kvi}} = \text{Id} - \text{kvi}$

$$\varepsilon = \text{Tgyvi}^T.\text{Rbc} - \text{Tgp}^T.\text{Rt} - (\text{Id} - \text{kvi}).(\text{Tgyvi}^T((\text{Id} + \text{kbc}).\text{Rbc} - \text{dbc}) - \text{Tgp}^T.\text{Rt}) \qquad (7)$$

Si nous considérons maintenant une phase d'utilisation de l'appareil avec des mouvements d'attitudes faibles, typiquement une phase d'observation d'un point fixe du paysage, et la sommation par exemple sur 10s de $\varepsilon$. On considérera que sur 10s la variation d'attitude ne dépasse pas 0.1°. Cela signifie que sur l'intégrale de $\varepsilon$ les termes de Rbc ne dépassent pas la classe 50°/h, ce qui implique que les termes du second ordre produits entre les termes des matrices kbc et kvi qui n'excèdent pas 0.01, et les termes de Rbc, n'excèdent pas 0.5°/h. De la même manière, la rotation terrestre de 15°/h multipliée par des termes kvi sont de la classe 0.15°/h. Ces valeurs sont à mettre en regard des valeurs de dérives des gyromètres bas coût, de la classe 20°/h. On peut alors dans l'équation (7) négliger les termes du second et troisième ordre $\text{Tgyvi}^T.\text{kbc}.\text{Rbc}$, $\text{kvi}.\text{Tgyvi}^T.\text{Rbc}$, $\text{kvi}.\text{Tgyvi}^T.\text{kbc}. \text{Rbc}$, , $\text{kvi}.\text{Tgyvi}^T. \text{dbc}$, et enfin $\text{kvi}.\text{Tgp}^T.\text{Rt}$, pour obtenir :

$$\varepsilon = \text{Tgyvi}^T.\text{dbc} \qquad (8)$$

Autrement dit, la comparaison de la mesure de vision et de l'information équivalente reconstituée par les gyromètres primaires permet d'observer les termes de dérives des gyromètres primaires, en négligeant dans l'équation (8) les termes du second ordre dépendants des vitesses de rotation et des erreurs de calages des trièdres.

*D) Procédé de d'entretien d'attitude d'un porteur*

Les principes généraux exposés dans les sections B) et C) qui précèdent peuvent être utilisés pour implémenter un procédé d'entretien d'attitude mis en œuvre par le dispositif d'entretien schématiquement représenté sur les figures 1 et 2.

On représente l'attitude du porteur [p] comme le vecteur comprenant des rotations de cap, de tangage et de roulis $\begin{bmatrix} c \\ t \\ r \end{bmatrix}$.

En référence à la **figure 3,** dans une étape 100, les trois gyromètres primaires 1, 2, 3 mesurent les trois vitesses de rotation Rbc1, Rbc2, Rbc3 du porteur autour des trois axes primaires.

Ces vitesses sont regroupées dans le vecteur $\mathrm{Rbc} = \begin{bmatrix} \mathrm{Rbc1} \\ \mathrm{Rbc2} \\ \mathrm{Rbc3} \end{bmatrix}$.

Par ailleurs, le gyromètre secondaire 4 mesure dans une étape 102 une vitesse de rotation Rhp du porteur autour de son axe secondaire, qui est sécant avec chacun des axes primaires.

Dans une étape 104, la caméra 5 acquiert des images.

Dans une étape 106, une analyse des images captées par la caméra 5 est mise en œuvre de sorte à produire une estimation de la vitesse de rotation du porteur dans l'espace sous la forme du vecteur $\mathrm{Rvi} = \begin{bmatrix} \mathrm{Rvi1} \\ \mathrm{Rvi2} \\ \mathrm{Rvi3} \end{bmatrix}$.

L'analyse des images peut être mise en œuvre au moyen d'un algorithme de mesure d'un flot optique dans ces images, comme indiqué précédemment dans la section C).

Les données de rotation suivantes sont transmises au module de traitement 6:

- Rbc (fournies par les gyromètres primaires 1, 2, 3),
- Rhp (fournies par le gyromètre secondaire 4),
- Rvi (issues de l'analyse des images captées par la caméra 5).

Ces données sont traitées par le module de traitement 6 pour produire une mesure de l'attitude du porteur.

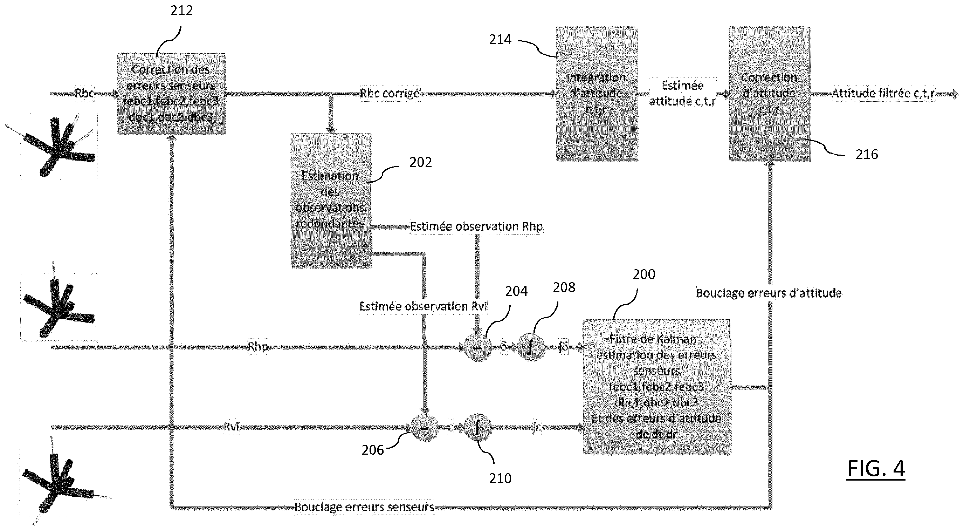

Dans un premier mode de réalisation de traitement illustré sur la **figure 4,** le module de traitement 6 applique les traitements suivants.

Le module de traitement 6 estime 200 les erreurs de facteur d'échelle et de dérive qui entachent les vitesses de rotation primaires, à l'aide de la vitesse de rotation secondaire *Rhp* et des données *Rvi* issues des images acquises par la caméra 5.

L'estimation 200 des erreurs de facteurs d'échelle et de dérive est mise en œuvre par le filtre d'hybridation exécuté par au moins un processeur du module de traitement 6.

Le filtre d'hybridation fournit en outre une estimation d'erreur d'attitude : une erreur de cap *dc,* une erreur de roulis *dr,* et une erreur de tangage *dt.*

Dans une étape 202, le module de traitement 6 calcule une vitesse de rotation secondaire du porteur autour de l'axe secondaire à partir des vitesses de rotation primaires *Rbc,* cette vitesse ainsi calculée constituant une information redondante par rapport à la vitesse de rotation *Rhp* fournie par le gyromètre secondaire 4.

Dans le cas où les axes primaires sont orthogonaux deux à deux et où l'axe secondaire est orienté diagonalement par rapport aux axes primaires, cette vitesse redondante s'écrit $\frac{[1\ \ 1\ \ 1].\mathrm{Rbc}}{\sqrt{3}}$, comme indiqué précédemment dans la section B.

Le module de traitement 6 calcule par ailleurs un vecteur vitesse de rotation de la caméra 5, à partir des vitesses de rotation primaires *Rbc,* constituant une information redondante par rapport à la vitesse *Rvi,* obtenue par analyse des images captées par la caméra 5.

Dans une étape 204, le module de traitement 6 calcule l'écart $\delta$ entre la vitesse de rotation secondaire mesurée par le gyromètre secondaire 4 et la vitesse de rotation secondaire estimée constituant une information redondante.

Dans une étape 206, le module de traitement 6 calcule l'écart $\varepsilon$ entre la vitesse de rotation autour de l'axe optique de la caméra 5, déduite des images captées par celle-ci, et la vitesse de rotation redondante autour du même axe optique, estimée à l'aide des mesures de vitesse primaire *Rbc.*

Dans le cas où les axes primaires sont orthogonaux deux à deux et où l'axe secondaire est orienté diagonalement par rapport aux axes primaires, l'écart $\varepsilon$ peut être calculé suivant la formule (7) mentionnée précédemment dans la section C).

Les écarts de vitesse $\delta$ et $\varepsilon$ sont intégrés temporellement dans des étapes 208 et 210, puis les résultats $\int\delta$ et $\int\varepsilon$ de ces intégrations temporelles sont utilisés par le filtre d'hybridation pour estimer 200 les erreurs de facteur d'échelle et les erreurs de dérive qui entachent les mesures de vitesse de rotation primaires.

Comme indiqué précédemment, le filtre d'hybridation peut être un filtre de Kalman, qui est un estimateur simple à mettre en œuvre.

Dans un mode de réalisation particulier, ce filtre de Kalman met en œuvre les équations suivantes d'évolution et d'observation :

$$\begin{cases} \dot{X} = F(X).X \\ Y = H(X).X \end{cases}$$

Où *X* est un vecteur d'état composé des trois erreurs d'attitude *dc, dt, dr,* des six erreurs senseurs (c'est-à-dire les trois erreurs de facteur d'échelle *f ebc* et les trois erreurs de dérive *dbc*) et de l'intégrale temporelle des deux écarts $\delta$ et $\varepsilon$ définis précédemment.

$$X = \begin{bmatrix} dc \\ dt \\ dr \\ febc1 \\ febc2 \\ febc3 \\ dbc1 \\ dbc2 \\ dbc3 \\ \int \delta \\ \int \varepsilon 1 \\ \int \varepsilon 2 \\ \int \varepsilon 3 \end{bmatrix}$$

La matrice d'évolution *F(X)* s'écrit :

$$F(X) = \begin{bmatrix} \sim & \sim & \sim & \sim & \sim & \sim & \sim & \sim & \sim & \sim & \sim \\ \sim & \sim & \sim & \sim & \sim & \sim & \sim & \sim & \sim & \sim & \sim \\ \sim & \sim & \sim & \sim & \sim & \sim & \sim & \sim & \sim & \sim & \sim \\ 0 & 0 & 0 & 0 & 0 & 0 & 0 & 0 & 0 & 0 & 0 \\ 0 & 0 & 0 & 0 & 0 & 0 & 0 & 0 & 0 & 0 & 0 \\ 0 & 0 & 0 & 0 & 0 & 0 & 0 & 0 & 0 & 0 & 0 \\ 0 & 0 & 0 & 0 & 0 & 0 & 0 & 0 & 0 & 0 & 0 \\ 0 & 0 & 0 & 0 & 0 & 0 & 0 & 0 & 0 & 0 & 0 \\ 0 & 0 & 0 & 0 & 0 & 0 & 0 & 0 & 0 & 0 & 0 \\ 0 & 0 & 0 & Rbc1 & Rbc2 & Rbc3 & 0 & 0 & 0 & 0 & 0 \\ 0 & 0 & 0 & 0 & 0 & 0 & 1 & 0 & 0 & 0 & 0 \\ 0 & 0 & 0 & 0 & 0 & 0 & 0 & 1 & 0 & 0 & 0 \\ 0 & 0 & 0 & 0 & 0 & 0 & 0 & 0 & 1 & 0 & 0 \end{bmatrix}$$

Les termes ici notés ~ de la matrice d'évolution *F(X)* sont aisément déterminables par l'homme du métier. Ces termes contiennent les dépendances des variations d'erreurs d'attitudes vis-à-vis des erreurs d'attitude elles-mêmes et des erreurs senseurs.

Le vecteur d'observation *Y* du filtre de Kalman contient directement les intégrales des observations de redondance formées par les écarts $\delta$ et $\varepsilon$ :

$$Y = \begin{bmatrix} \int \delta \\ \int \varepsilon 1 \\ \int \varepsilon 2 \\ \int \varepsilon 3 \end{bmatrix}$$

Enfin la matrice H de passage d'état à observation s'écrit :

$$H(X) = \begin{bmatrix} 0 & 0 & 0 & 0 & 0 & 0 & 0 & 1 & 0 & 0 & 0 \\ 0 & 0 & 0 & 0 & 0 & 0 & 0 & 0 & 1 & 0 & 0 \\ 0 & 0 & 0 & 0 & 0 & 0 & 0 & 0 & 0 & 1 & 0 \\ 0 & 0 & 0 & 0 & 0 & 0 & 0 & 0 & 0 & 0 & 1 \end{bmatrix}$$

Après l'étape d'estimation 200 mise en œuvre au moyen du filtre d'hybridation, le module de traitement 6 corrige 212 les données de vitesse Rbc à l'aide des estimations d'erreur de facteur d'échelle et de dérive produite par ce filtre d'hybridation.

Cette correction 212 est typiquement mise en œuvre par application de la formule suivante :

$$\begin{bmatrix} febc1 & 0 & 0 \\ 0 & febc2 & 0 \\ 0 & 0 & febc3 \end{bmatrix} . Rbc - \begin{bmatrix} dbc1 \\ dbc2 \\ dbc3 \end{bmatrix}$$

Le résultat de cette formule constitue un vecteur de vitesses primaires corrigées par rapport aux vitesses primaires *Rbc* fournies par le trièdre de gyromètres primaires.

Dans un mode de réalisation, les calculs des informations redondantes permettant d'aboutir aux écarts $\delta$ et $\varepsilon$ ne sont pas mis en œuvre sur la base des données de vitesse *Rbc* directement fournies par les gyromètres primaires (et donc entachées d'erreurs senseur de facteur d'échelle et de dérives), mais sur la base des vitesses primaires corrigées.

En d'autres termes, le filtre d'hybridation fonctionne à l'aide d'un bouclage des erreurs senseurs des gyromètres primaires 1, 2, 3.

Dans une étape 214, le module de traitement intègre les vitesses de rotation corrigées obtenues via l'étape de correction 212, de sorte à obtenir une première estimée $\begin{bmatrix} c \\ t \\ r \end{bmatrix}$ de l'attitude du porteur.

Dans une étape 216, le module de traitement 6 applique un traitement de correction de cette première estimée d'attitude au moyen des erreurs d'attitude *dc, dr, dt* produites par le filtre d'hybridation. En d'autres termes, est mis en œuvre par le filtre de Kalman un bouclage des erreurs d'attitudes.

Le traitement de correction de l'étape 216 produit ainsi une attitude du porteur filtrée, plus précise que la première estimée de cette attitude.

Le filtre de Kalman effectue un bouclage des erreurs senseurs et des erreurs d'intégration d'attitude, à une fréquence plus lente que la fréquence d'intégration d'attitude. Lors d'un rebouclage, les termes du vecteur d'état X sont mis à zéros.

A noter que l'indice de confiance de la mesure de vision *Rvi* n'est pas représenté sur la figure 4. Une mise en œuvre simple peut consister à ignorer la mesure de vision *Rvi* dans le processus lorsque l'indice de confiance de mesure du flot optique franchit un seuil prédéterminé. Dans ce cas, il n'y a pas d'observation vision *Rvi* de disponible, et le filtre de Kalman « attend » une prochaine observation disponible pour les corrections d'erreurs d'attitude et d'erreurs senseurs dépendantes de la vision.

Dans le mode de réalisation illustré sur la figure 4, le filtre d'hybridation utilisé est relativement simple. Toutefois, un filtre d'hybridation plus élaboré peut être construit, avec un vecteur d'état X contenant l'ensemble des erreurs de tous les senseurs utilisés (gyromètres 1, 2, 3, 4 et caméra 5), dérives, facteurs d'échelles et calages d'axes, et en construisant la matrice d'évolution *F(X)* avec toutes les interdépendances correspondantes. Une correction des erreurs senseurs et d'attitude globale, cohérente et optimale est ainsi élaborée. Notamment, il peut être pertinent dans un mode de réalisation d'estimer par ailleurs l'erreur de focale de la caméra 5.

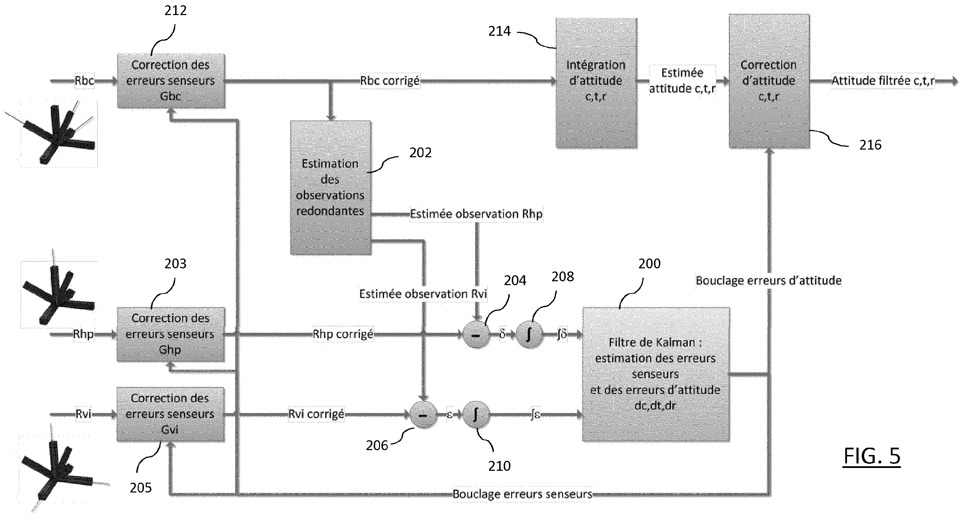

En application de ce principe, est illustré sur la **figure 5** les étapes d'un procédé dans lequel le vecteur d'état du filtre de Kalman comprend non seulement les erreurs de facteur d'échelle et de dérive des gyromètres primaires, mais également les erreurs de facteur d'échelle et de dérive du gyromètre secondaire.

Le procédé selon ce second mode de réalisation diffère de celui illustré sur la figure 4 par les étapes supplémentaires suivantes.

Dans une étape 203, le module de traitement corrige la mesure de vitesse secondaire *Rhp* fournie par le gyromètre secondaire à l'aide des erreurs de facteur d'échelle et de dérive relatives à ce gyromètre secondaire qui ont été préalablement été estimées par le filtre d'hybridation. Le résultat de cette étape de correction est une vitesse de rotation secondaire corrigée.

L'écart $\delta$ calculé dans l'étape 204 par le module de traitement est l'écart entre la vitesse de rotation secondaire corrigée et la vitesse de rotation secondaire redondante.

En d'autres termes, la vitesse de rotation mesurée par le gyromètre secondaire 4 utilisée dans le premier mode de réalisation illustré sur la figure 4 pour calculer l'écart δ est remplacée dans le deuxième mode de réalisation illustré sur la figure 5 par la vitesse de rotation secondaire corrigée.

Similairement, dans une étape 205, le module de traitement 6 corrige la mesure de vitesse de rotation *Rvi* (laquelle comprend, pour rappel, 3 composantes dont une composante de rotation autour de l'axe optique) issue de la caméra 5, à l'aide des erreurs suscitées par la caméra 5 (par exemple une erreur de focale de la caméra 5) qui ont été préalablement été estimées 200 par le filtre d'hybridation. Le résultat de cette étape de correction est une vitesse de rotation caméra corrigée.

L'écart ε calculé par le module de traitement dans l'étape 206 est l'écart entre la vitesse de rotation corrigée et la vitesse de rotation secondaire redondante.

En d'autres termes, la vitesse de rotation caméra, utilisée dans le premier mode de réalisation illustré sur la figure 4 pour calculer l'écart ε, est remplacée dans le deuxième mode de réalisation illustré sur la figure 5 par une vitesse de rotation caméra corrigée.

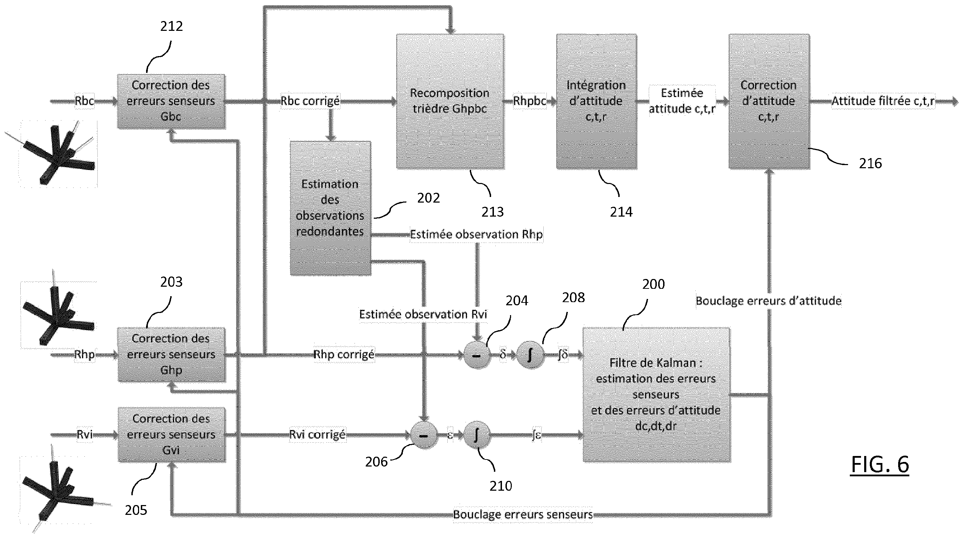

Dans un troisième mode de réalisation illustré sur la **figure 6,** un traitement supplémentaire 213 est mis en œuvre entre les étapes de correction 102 des erreurs de facteur d'échelle et de dérive qui entachent les mesures de vitesse de rotation primaires, et l'étape d'intégration 214.

Ce traitement supplémentaire 213 est une recomposition d'un trièdre inertiel à partir de la vitesse de rotation secondaire corrigée via l'étape de correction 212.

Ce trièdre inertiel est composé de l'axe secondaire et de deux autres axes orthogonaux avec l'axe secondaire.

Le traitement de recomposition 213 produit un vecteur de trois vitesses de rotations *Rhpbc,* qui font l'objet de l'intégration 214 en lieu et place des vitesses de rotation primaires *Rbc* corrigées pour obtenir les données d'attitude *c, t, r.*

De cette manière, les qualités de l'axe secondaire Ghp sont exploitées directement dans l'intégration d'attitude 214 et l'on améliore ainsi la précision de la solution d'attitude obtenue, surtout dans les trajectoires pour lesquelles cet axe est majoritairement excité.

Le tableau ci-dessous récapitule les avantages et inconvénients des différents éléments du dispositif d'entretien d'attitude selon l'invention, et comment ces éléments entrent en synergie les uns avec les autres lorsqu'ils sont combinés conformément à l'invention.

Chaque élément du dispositif d'entretien d'attitude est ainsi plus ou moins performant ce qui concerne :

- sa capacité à produire des données faiblement entachées d'erreurs de facteur d'échelle ;
- sa capacité à produire des données faiblement entachées d'erreurs de dérive ;
- sa disponibilité, c'est-à-dire sa capacité à produire des données en continu (disponibilité élevée) ou seulement par intermittences (disponibilité faible).

Ce tableau montre que la combinaison des gyromètres primaires, du gyromètre secondaire et de la caméra offre une protection efficace contre des erreurs de facteur d'échelle et de dérive, tout en étant apte à fournir des estimation d'attitude en continu.

| | Protection contre des erreurs de facteur d'échelle ? | Protection contre des erreurs de dérive ? | Disponibilité ? |
|---|---|---|---|
| Gyromètres primaires (3 axes) | Faible | Faible | Elevée |
| Gyromètre secondaire (1 axe) | Elevée | Elevée | Elevée |
| Caméra (3 axes) | Faible | Elevée pour 2 axes Faible pour 1 axe | Faible |
| Caméra + Gyromètre secondaire | Elevée | Elevée sur 2 axes, Faible sur 1 axe | Faible |
| Gyromètres primaires + Gyromètre secondaire (« diacube ») | Elevée | Elevée sur 1 axe, Faible sur 2 axes | Elevée |
| Caméra + Gyromètres primaires + Gyromètre secondaire | Elevée | Elevée | Elevée |

**Revendications**

1.  Dispositif d'entretien d'attitude d'un porteur, le dispositif comprenant :

    • trois gyromètres primaires (1, 2, 3) agencés pour mesurer des vitesses de rotation primaires (Rbc) d'un porteur autour de trois axes primaires,
    • Un gyromètre secondaire (4) agencé pour mesurer une vitesse de rotation secondaire (Rhp) du porteur autour d'un axe secondaire différent de chacun des axes primaires,
    • une caméra (5) présentant un axe optique différent de chacun des axes primaires,
    • un module de traitement de données (6) configuré pour

    ◦ estimer des erreurs de facteur d'échelle et de dérive qui entachent les vitesses de rotation primaires (Rbc) à l'aide de données issues de la vitesse de rotation secondaire (Rhp) et d'images acquises par la caméra (5), et
    ◦ corriger les vitesses de rotation primaires avec lesdites erreurs estimées, le dispositif étant **caractérisé en ce que** le gyromètre secondaire (4) est d'un type adapté pour susciter des erreurs de facteur d'échelle et/ou des erreurs de dérive dans la vitesse de rotation secondaire qui sont inférieures à celles suscitées par les gyromètres primaires (1, 2, 3) dans les vitesses de rotation primaires.

2.  Dispositif selon la revendication précédente, dans lequel le module de traitement de données (6) comprend un filtre d'hybridation, tel qu'un filtre de Kalman, configuré pour estimer les erreurs de facteur d'échelle et de dérive à partir des données issues de la vitesse de rotation secondaire (Rhp) et d'images acquises par la caméra (5).

3.  Dispositif selon l'une des revendications précédentes, dans lequel l'axe optique de la caméra est parallèle à l'axe secondaire.

4.  Dispositif selon l'une de revendications précédentes, dans lequel le gyromètre secondaire (4) est du type hémisphérique vibrant.

5.  Dispositif selon l'une de revendications précédentes, dans lequel les gyromètres primaires (1, 2, 3) sont du type MEMS.

6.  Dispositif selon l'une des revendications précédentes, dans lequel les trois axes primaires sont orthogonaux deux à deux, et l'axe secondaire forme un angle de 54.7° degrés avec chaque axe primaire.

7.  Procédé d'entretien d'attitude d'un porteur, comprenant des étapes de :

    • mesure (100) de trois vitesses de rotation du porteur autour de trois axes primaires sécants deux à deux à l'aide de trois gyromètres primaires,
    • mesure (102) d'une vitesse de rotation autour d'un axe secondaire sécant avec chacun des axes primaires à l'aide d'un gyromètre secondaire,
    • acquisition (104) d'images à l'aide d'une caméra présentant un axe optique différent de chacun des axes primaires,
    • estimation (200) d'erreurs de facteur d'échelle et de dérive qui entachent les vitesses de rotation primaires, à l'aide de données issues de la vitesse de rotation secondaire et issues des images acquises par la caméra,
    • correction (202) des vitesses de rotation primaires à l'aide desdites erreurs estimées, le procédé étant **caractérisé en ce que** le gyromètre secondaire (4) est choisi d'un type adapté pour susciter des erreurs de facteur d'échelle et/ou des erreurs de dérive dans la vitesse de rotation secondaire qui sont inférieures à celles suscitées par les gyromètres primaires (1, 2, 3) dans les vitesses de rotation primaires.

8.  Procédé selon la revendication précédente, dans lequel l'estimation (200) des erreurs de facteur d'échelle et de dérive est mise en œuvre par un filtre d'hybridation, tel qu'un filtre de Kalman, au moyen de données d'observation dépendant d'un écart $\delta$ entre :

    • une vitesse de rotation dépendant de la vitesse de rotation secondaire, et
    • une vitesse de rotation du porteur autour de l'axe secondaire déduite des vitesses de rotation primaires.

9.  Procédé selon la revendication précédente, dans lequel la vitesse de rotation dépendant de la vitesse de rotation secondaire est une vitesse résultant d'une correction (203) de la vitesse de rotation secondaire au moyen d'erreurs suscitées par le gyromètre secondaire préalablement estimées (200) par le filtre d'hybridation.

**10.** Procédé selon l'une des revendications 7 à 9, comprenant l'estimation d'une vitesse de rotation, dite vitesse de rotation caméra, et qui est obtenue par analyse (106) des images acquises par la caméra (5), la correction des erreurs de facteur d'échelle et de dérive dépendant de cette vitesse de rotation caméra estimée.

**11.** Procédé selon la revendication précédente, dans lequel l'estimation (200) des erreurs de facteur d'échelle et de dérive est mise en œuvre au moyen de données d'observation dépendant d'un écart $\varepsilon$ entre :

- une vitesse de rotation dépendant de la vitesse de rotation caméra, et
- une vitesse de rotation du porteur vue par la caméra (5), qui est déduite (202) des vitesses de rotation primaires.

**12.** Procédé selon la revendication précédente, comprenant par ailleurs des étapes de :

- estimation (200) d'une erreur de focale suscitée par la caméra (5),
- correction (205), à l'aide de l'erreur de focale, de la vitesse de rotation caméra obtenue par analyse des images acquises par la caméra, de sorte à produire une vitesse de rotation caméra corrigée,

et dans lequel la vitesse de rotation dépendant de la vitesse de rotation caméra estimée utilisée pour calculer l'écart $\varepsilon$ est la vitesse de rotation caméra corrigée.

**13.** Procédé selon l'une des revendications 7 à 12, comprenant en outre des étapes de :

- calcul d'un indice de confiance sur la mesure d'un flot optique dans les images acquises par la caméra (5),
- comparaison de l'indice avec un seuil prédéterminé,

l'étape de correction (202) des vitesses de rotation primaires étant mise en œuvre ou non en fonction du résultat de cette comparaison.

**14.** Procédé selon l'une des revendications 7 à 13, dans lequel les vitesses de rotation primaires *Rbc* sont corrigées (212) par application de la formule suivante :

$$\begin{bmatrix} febc1 & 0 & 0 \\ 0 & febc2 & 0 \\ 0 & 0 & febc3 \end{bmatrix}.Rbc - \begin{bmatrix} dbc1 \\ dbc2 \\ dbc3 \end{bmatrix}$$

où *febc*1, *febc*2, *febc*3 sont les erreurs de facteur d'échelle et *dbc*1, *dbc*2 et *dbc*3 sont les erreurs de dérive.

**15.** Procédé selon l'une des revendications 7 à 14, comprenant en outre une étape d'intégration (214) produisant des données d'attitude du porteur à partir des vitesses de rotation primaires corrigées.

**16.** Procédé selon la revendication précédente dans son rattachement à la revendication 9, comprenant en outre le calcul (213) de trois vitesses de rotation dites recomposées à partir de:

- les vitesses de rotation primaires corrigées à l'aide des erreurs de facteur d'échelle et de dérive estimées,
- la vitesse résultant de la correction de la vitesse de rotation secondaire,

dans lequel l'une des vitesses de rotation recomposées est une vitesse de rotation autour de l'axe secondaire, et dans lequel les données d'attitude du porteur sont produites par intégration des vitesses de rotation recomposées.

**17.** Procédé selon l'une des revendications 15 et 16, comprenant en outre les étapes de :

- estimation (200) d'erreurs d'attitude du porteur,
- correction (216) des données d'attitude produites au moyen des erreurs d'attitude estimées.

**Patentansprüche**

1. Vorrichtung zur Bewahrung der Lage eines Trägers, wobei die Vorrichtung umfasst:

• drei primäre Kreisel (1, 2, 3), die eingerichtet sind, um primäre Rotationsgeschwindigkeiten (Rbc) eines Trägers um drei primäre Achsen zu messen,
• einen sekundären Kreisel (4), der eingerichtet ist, um eine sekundäre Rotationsgeschwindigkeit (Rhp) des Trägers um eine sekundäre Achse zu messen, die sich von jeder der primären Achsen unterscheidet,
• eine Kamera (5), die eine optische Achse aufweist, die sich von jeder der primären Achsen unterscheidet,
• ein Datenverarbeitungsmodul (6), das konfiguriert ist, um

◦ Skalierungsfaktor- und Driftfehler, die die primären Rotationsgeschwindigkeiten (Rbc) beeinträchtigen, mit Hilfe von Daten zu ermitteln, die aus der sekundären Rotationsgeschwindigkeit (Rhp) und aus von der Kamera (5) aufgenommenen Bildern hervorgegangen sind, und
◦ die primären Rotationsgeschwindigkeiten mit Hilfe der ermittelten Fehler zu korrigieren,

wobei die Vorrichtung **dadurch gekennzeichnet ist, dass** der sekundäre Kreisel (4) von einem Typ ist, der geeignet ist, Skalierungsfaktorfehler und/oder Driftfehler in der sekundären Rotationsgeschwindigkeit zu verursachen, die kleiner sind als die, die von den primären Kreiseln (1, 2, 3) in den primären Rotationsgeschwindigkeiten verursacht werden.

2. Vorrichtung nach dem vorangehenden Anspruch, wobei das Datenverarbeitungsmodul (6) einen Hybridisierungsfilter wie ein Kalman-Filter umfasst, der konfiguriert ist, um die Skalierungsfaktor- und Driftfehler auf der Basis von Daten zu ermitteln, die aus der sekundären Rotationsgeschwindigkeit (Rhp) und aus von der Kamera (5) aufgenommenen Bildern hervorgegangen sind.

3. Vorrichtung nach einem der vorangehenden Ansprüche, wobei die optische Achse der Kamera parallel zur sekundären Achse ist.

4. Vorrichtung nach einem der vorangehenden Ansprüche, wobei der sekundäre Kreisel (4) vom hemisphärischen Vibrationstyp ist.

5. Vorrichtung nach einem der vorangehenden Ansprüche, wobei die primären Kreisel (1, 2, 3) vom Typ MEMS sind.

6. Vorrichtung nach einem der vorangehenden Ansprüche, wobei die drei primären Achsen paarig orthogonal sind und die sekundäre Achse einen Winkel von 54,7 Grad mit jeder primären Achse bildet.

7. Verfahren zur Bewahrung der Lage eines Trägers, umfassend die folgenden Schritte:

• Messen (100) von drei Rotationsgeschwindigkeiten des Trägers um drei paarig schneidende primäre Achsen mit Hilfe von drei primären Kreiseln,
• Messen (102) einer Rotationsgeschwindigkeit um eine mit jeder der primären Achsen schneidende sekundäre Achse mit Hilfe eines sekundären Kreisels,
• Aufnehmen (104) von Bildern mit Hilfe einer Kamera, die eine optische Achse aufweist, die sich von jeder der primären Achsen unterscheidet,
• Ermitteln (200) von Skalierungsfaktor- und Driftfehlern, die die primären Rotationsgeschwindigkeiten beeinträchtigen, mit Hilfe von Daten, die aus der sekundären Rotationsgeschwindigkeit und aus von der Kamera aufgenommenen Bildern hervorgegangen sind,
• Korrigieren (202) der primären Rotationsgeschwindigkeiten mit Hilfe der ermittelten Fehler,

wobei das Verfahren **dadurch gekennzeichnet ist, dass** der sekundäre Kreisel (4) von einem Typ ausgewählt ist, der geeignet ist, Skalierungsfaktorfehler und/oder Driftfehler in der sekundären Rotationsgeschwindigkeit zu verursachen, die kleiner sind als die, die von den primären Kreiseln (1, 2, 3) in den primären Rotationsgeschwindigkeiten verursacht werden.

8. Verfahren nach vorangehendem Anspruch, wobei die Ermittlung (200) der Skalierungsfaktor- und Driftfehler von einem Hybridisierungsfilter wie ein Kalman-Filter mittels Beobachtungsdaten durchgeführt wird, die von einer Abweichung $\delta$ abhängen zwischen:

• einer Rotationsgeschwindigkeit, die von der sekundären Rotationsgeschwindigkeit abhängt, und
• einer von den primären Rotationsgeschwindigkeiten abgeleiteten Rotationsgeschwindigkeit des Trägers um die sekundäre Achse.

9. Verfahren nach vorangehendem Anspruch, wobei die von der sekundären Rotationsgeschwindigkeit abhängende Rotationsgeschwindigkeit eine Geschwindigkeit ist, die aus einer Korrektur (203) der sekundären Rotationsgeschwindigkeit mittels von dem sekundären Kreisel verursachten, zuvor von dem Hybridisierungsfilter ermittelten (200) Fehlern resultiert.

10. Verfahren nach einem der Ansprüche 7 bis 9, umfassend die Ermittlung einer als Kamerarotationsgeschwindigkeit bezeichneten Rotationsgeschwindigkeit, und die durch Analyse (106) der von der Kamera (5) aufgenommenen Bilder erhalten wird, wobei die Korrektur der Skalierungsfaktor- und Driftfehler von dieser ermittelten Kamerarotationsgeschwindigkeit abhängt.

11. Verfahren nach vorangehendem Anspruch, wobei die Ermittlung (200) der Skalierungsfaktor- und Driftfehler mittels Beobachtungsdaten durchgeführt wird, die von einer Abweichung $\varepsilon$ abhängen zwischen:

• einer Rotationsgeschwindigkeit, die von der Kamerarotationsgeschwindigkeit abhängt, und
• einer von der Kamera (5) beobachteten Rotationsgeschwindigkeit des Trägers, die von den primären Rotationsgeschwindigkeiten abgeleitet (202) ist.

12. Verfahren nach vorangehendem Anspruch, umfassend im Übrigen die Schritte:

• Ermitteln (200) eines von der Kamera (5) verursachten Fokalfehlers,
• Korrigieren (205), mit Hilfe des Fokalfehlers, der durch Analyse der von der Kamera aufgenommenen Bilder erhaltenen Kamerarotationsgeschwindigkeit, so dass eine korrigierte Kamerarotationsgeschwindigkeit erzeugt wird,

und wobei die Rotationsgeschwindigkeit, die von der ermittelten Kamerarotationsgeschwindigkeit abhängt, die zur Berechnung der Abweichung $\varepsilon$ verwendet wird, die korrigierte Kamerarotationsgeschwindigkeit ist.

13. Verfahren nach einem der Ansprüche 7 bis 12, umfassend ferner die folgenden Schritte:

• Berechnen eines Vertrauensindexes über die Messung einer optischen Welle in den von der Kamera (5) aufgenommenen Bildern,
• Vergleichen des Indexes mit einem vorher festgelegten Grenzwert,

wobei der Korrekturschritt (202) der primären Rotationsgeschwindigkeiten in Abhängigkeit vom Ergebnis dieses Vergleichs durchgeführt wird oder nicht.

14. Verfahren nach einem der Ansprüche 7 bis 13, wobei die primären Rotationsgeschwindigkeiten *Rbc* korrigiert werden (212) durch Anwendung der folgenden Formel:

$$\begin{bmatrix} febc1 & 0 & 0 \\ 0 & febc2 & 0 \\ 0 & 0 & febc3 \end{bmatrix} . Rbc - \begin{bmatrix} dbc1 \\ dbc2 \\ dbc3 \end{bmatrix}$$

wobei *febc*1, *febc*2, *febc*3 Skalierungsfaktorfehler sind und *dbc*1, *dbc*2 and *dbc*3 Driftfehler sind.

15. Verfahren nach einem der Ansprüche 7 bis 14, umfassend ferner einen Integrationsschritt (214), der Lagedaten des Trägers auf der Basis der korrigierten primären Rotationsgeschwindigkeiten erzeugt.

16. Verfahren nach vorangehendem Anspruch in Verbindung mit Anspruch 9, umfassend ferner die Berechnung (213) von drei als wieder zusammengesetzt bezeichneten Rotationsgeschwindigkeiten auf der Basis:

• der mit Hilfe der ermittelten Skalierungsfaktor- und Driftfehler korrigierten primären Rotationsgeschwindigkeiten,

• der aus der Korrektur der sekundären Rotationsgeschwindigkeit resultierenden Geschwindigkeit,

wobei eine der wieder zusammengesetzten Rotationsgeschwindigkeiten eine Rotationsgeschwindigkeit um die sekundäre Achse ist, und wobei die Lagedaten des Trägers durch Integration der wieder zusammengesetzten Rotationsgeschwindigkeiten erzeugt werden.

17. Verfahren nach einem der Ansprüche 15 und 16, umfassend ferner die folgenden Schritte:

• Ermitteln (200) von Lagefehlern des Trägers,
• Korrigieren (216) der mittels ermittelter Lagefehler erzeugten Lagedaten.

**Claims**

1. A device for maintaining the attitude of a carrier, the device comprising:

• three primary gyroscopes (1, 2, 3) arranged to measure primary rotation speeds (Rbc) of a carrier around three primary axes,
• a secondary gyroscope (4) arranged to measure a secondary rotation speed (Rhp) of the carrier around a secondary axis different to each of the primary axes,
• a camera (5) presenting an optical axis different to each of the primary axes,
• a data-processing module (6) configured to

   ◦ estimate scale-factor and drift errors which jeopardize the primary rotation speeds (Rbc) from data originating from the secondary rotation speed (Rhp) and images acquired by the camera (5), and
   ◦ correct the primary rotation speeds with said estimated errors,

the device being **characterized in that** the secondary gyroscope (4) is of a type adapted to generate scale-factor errors and/or drift errors in the secondary rotation speed which are less than those generated by the primary gyroscopes (1, 2, 3) in the primary rotation speeds.

2. The device according to the preceding claim, wherein the data-processing module (6) comprises a hybridizing filter, such as a Kalman filter, configured to estimate the scale-factor and drift errors from the data originating from the secondary rotation speed (Rhp) and images acquired by the camera (5).

3. The device according to one of the preceding claims, wherein the optical axis of the camera is parallel to the secondary axis.

4. The device according to one of the preceding claims, wherein the secondary gyroscope (4) is of the hemispherical resonator type.

5. The device according to one of the preceding claims, wherein the primary gyroscopes (1, 2, 3) are of MEMS type.

6. The device according to one of the preceding claims, wherein the three primary axes are orthogonal in pairs, and the secondary axis forms an angle of 54.7° degrees with each primary axis.

7. A method for maintaining the attitude of a carrier, comprising the steps of:

• measuring (100), by three primary gyroscopes three rotation speeds of the carrier around three primary axes secant in pairs ,
• measuring (102), by a secondary gyroscope, a rotation speed around a secondary axis secant with each of the primary axes,
• acquiring (104) images by means of a camera having an optical axis different to each of the primary axes,
• estimating (200) scale-factor and drift errors which jeopardize the primary rotation speeds from data originating from the secondary rotation speed and originating from the images acquired by the camera,
• correcting (202) the primary rotation speeds with said estimated errors,

the method being **characterized in that** the secondary gyroscope (4) is selected from of a type adapted to generate scale-factor errors and/or drift errors in the secondary rotation speed which are less than those generated by the primary gyroscopes (1, 2, 3) in the primary rotation speeds.

8. The method according to the preceding claim, wherein estimating (200) the scale-factor and drift errors is performed by a hybridizing filter, such as a Kalman filter, which uses observation data depending on a spread $\delta$ between:

- a rotation speed depending on the secondary rotation speed, and
- a rotation speed of the carrier around the secondary axis deduced from the primary rotation speeds.

9. The Method according to the preceding claim, wherein the rotation speed depending on the secondary rotation speed is a speed resulting from a correction (203) of the secondary rotation speed by means of the errors generated by the secondary gyroscope previously estimated (200) by the hybridizing filter.

10. The method according to any one of claims 7 to 9, comprising estimating a camera rotation speed which is obtained by analysis (106) of the images acquired by the camera (5), wherein the correction of scale-factor and drift errors depend on this estimated camera rotation speed.

11. The method according to the preceding claim, wherein estimating (200) the scale-factor and drift errors is performed by means of observation data depending on a spread $\varepsilon$ between:

- a rotation speed depending on the camera rotation speed, and
- a rotation speed of the carrier viewed by the camera (5), which is deduced (202) from the primary rotation speeds.

12. The method according to the preceding claim, also comprising the steps of:

- estimating (200) a focal error generated by the camera (5),
- correcting (205), by means of the focal error, the camera rotation speed obtained by analysis of images acquired by the camera, so as to produce a corrected camera rotation speed,

and wherein the rotation speed depending on the estimated camera rotation speed used to calculate the spread $\varepsilon$ is the corrected camera rotation speed.

13. The method according to any one of claims 7 to 12, also comprising the steps of:

- calculating a confidence index on the measurement of an optical flow in the images acquired by the camera (5),
- comparing the index with a predetermined threshold,

wherein correcting (202) the primary rotation speeds is conducted or not as a function of the result of this comparison.

14. The method according to any one of claims 7 to 13, wherein the primary rotation speeds $Rbc$ are corrected (212) by application of the following formula:

$$\begin{bmatrix} febc1 & 0 & 0 \\ 0 & febc2 & 0 \\ 0 & 0 & febc3 \end{bmatrix}.Rbc - \begin{bmatrix} dbc1 \\ dbc2 \\ dbc3 \end{bmatrix}$$

where $febc1$, $febc2$, $febc3$ are the scale-factor errors and $dbc1$, $dbc2$ and $dbc3$ are the drift errors.

15. The method according to any one of claims 7 to 14, also comprising an integration step (214) producing attitude data of the carrier from the corrected primary rotation speeds.

16. The method according to the preceding claim in combination with claim 9, also comprising calculating (213) three regenerated rotation speeds called from:

- the primary rotation speeds corrected by means of the estimated scale-factor and drift errors,
- the speed resulting from the correction of the secondary rotation speed,

wherein one of the regenerated rotation speeds is a rotation speed around the secondary axis, and wherein the attitude data of the carrier are produced by integration of the regenerated rotation speeds.

17. The method according to any one of claims 15 and 16, also comprising the steps of:

- estimating (200) attitude errors of the carrier,
- correcting (216) attitude data produced by means of the estimated attitude errors.

1

2

3

6

4

5

**FIG. 1**

Ghp

Gbc2

Gbc3

Gbc1

Z

Z

Y

X

X

Y

**FIG. 2**

| Mesure de vitesses par les gyromètres primaires | 100 |

| Mesure de vitesses par le gyromètre secondaire | 102 |

| Acquisition d'images par la caméra | 104 |

| Analyse des images | 106 |

**FIG. 3**

EP 3 403 054 B1

FIG. 4

EP 3 403 054 B1

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9170105 B1


**Littérature non-brevet citée dans la description**

- **MYUNG HWANGBO et al.** IMU Self-Calibration Using Factorization. *IEEE TRANSACTIONS ON ROBOTICS*